(19) Europäisches Patentamt
European Patent Office
Office européen des brevets

(11) **EP 4 625 386 A1**

(12) **EUROPEAN PATENT APPLICATION**

(43) Date of publication:
01.10.2025 Bulletin 2025/40

(21) Application number: 25159787.8

(22) Date of filing: 25.02.2025

(51) International Patent Classification (IPC):
G08G 1/0962 (2006.01)    B60W 30/09 (2012.01)
B60W 30/095 (2012.01)    B60W 40/04 (2006.01)
B60W 50/00 (2006.01)    G01S 13/89 (2006.01)
G01S 17/89 (2020.01)    G01S 17/931 (2020.01)
G05D 1/246 (2024.01)    G05D 1/622 (2024.01)
G05D 1/633 (2024.01)    G05D 1/644 (2024.01)
G05D 1/646 (2024.01)    G06V 20/58 (2022.01)
G08G 1/16 (2006.01)

(52) Cooperative Patent Classification (CPC):
G08G 1/165; B60W 30/09; B60W 30/0956;
B60W 40/04; B60W 50/0097; G01S 13/89;
G01S 17/89; G01S 17/931; G05D 1/2464;
G05D 1/622; G05D 1/633; G05D 1/637;
G05D 1/644; G05D 1/646; G06V 20/58;    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.03.2024 JP 2024052068

(71) Applicant: HONDA MOTOR CO., LTD.
Tokyo 105-8404 (JP)

(72) Inventors:
• AIZAWA, Koki
Wako-shi, Saitama, 3510193 (JP)
• KURAMITSU, Yunosuke
Wako-shi, Saitama, 3510193 (JP)
• MATSUNAGA, Hideki
Wako-shi, Saitama, 3510193 (JP)

(74) Representative: Kiwit, Benedikt
Mitscherlich PartmbB
Patent- und Rechtsanwälte
Karlstraße 7
80333 München (DE)

(54) **MOVING OBJECT CONTROL SYSTEM, CONTROL METHOD THEREOF, MOVING OBJECT, AND STORAGE MEDIUM**

(57) A moving object control system (100) controls an operation of a moving object. The moving object control system comprises: obtaining means (302) for obtaining information of a sensor configured to recognize a periphery of the moving object; map generation means (303) for generating a dynamic prediction map (430) including information indicating a position of a static obstacle recognized based on the information of the sensor and information indicating a position of a dynamic obstacle that changes with time and is recognized based on the information of the sensor; and trajectory generation means (304) for generating a target trajectory for controlling traveling of the moving object by using the generated dynamic prediction map

FIG. 5

**(Cont. next page)**

(52) Cooperative Patent Classification (CPC): (Cont.)
**G08G 1/09626; G08G 1/166;** G01S 2013/9318;
G05D 2105/20; G05D 2109/10

**Description**

BACKGROUND OF THE INVENTION

Field of the Invention

The present invention relates to a moving object control system, a control method thereof, a moving object, and a storage medium.

Description of the Related Art

In these years, there is an increasing demand for ultra-compact moving objects (micro mobility vehicles) for supporting movements of people in small regions. The micro mobility vehicles require an autonomous movement technology in free spaces such as sidewalks in addition to an automated driving technology for traveling on roadways in order to enable traveling in both moving regions of automobiles and moving regions of pedestrians. It is assumed that not only a static obstacle that does not move but also an obstacle whose position dynamically changes, such as a bicycle, is present in advancing directions of the micro mobility vehicles. For this reason, the micro mobility vehicles need to travel along traveling trajectories with a high degree of freedom to flexibly avoid various obstacles.

International Publication No. 2022/070303 describes a technology in which a situation (scene) of a self-vehicle is judged based on predictions about future movements of obstacles to determine an action of the self-vehicle

Meanwhile, in a case where highly accurate map information generated in advance is not used, a micro mobility vehicle needs to move while generating a surrounding map by itself. In order to flexibly avoid a dynamic obstacle whose position changes, how to reflect the dynamic obstacle on the map generated by itself becomes a problem. Such a problem is not considered in International Publication No. 2022/070303.

SUMMARY OF THE INVENTION

The present invention has been made in view of the above problem, and an object thereof is to realize a technology capable of generating a map in consideration of the presence of a dynamic obstacle.

The present invention in its first aspect provides a moving object control system as specified in claims 1 to 10.

The present invention in its second aspect provides a moving object as specified in claim 11.

The present invention in its third aspect provides a control method of a moving object control system as specified in claim 12.

The present invention in its fourth aspect provides a computer readable storage medium as specified in claim 13.

According to the present invention, the technology capable of generating the map in consideration of the presence of the dynamic obstacle is realized.

BRIEF DESCRIPTION OF THE DRAWINGS

FIGS. 1A and 1B are diagrams illustrating a configuration example of a moving object according to an embodiment of the present invention;

FIG. 2 is a block diagram illustrating a configuration example of a control system of the moving object according to the embodiment;

FIG. 3 is a block diagram illustrating a functional configuration example related to a control unit of the moving object according to the embodiment;

FIG. 4 is a view (1) illustrating an example of generation of a dynamic prediction map according to the embodiment;

FIG. 5 is a view (2) illustrating an example of the generation of the dynamic prediction map according to the embodiment;

FIG. 6 is a view schematically illustrating a local route (trajectory) of the moving object according to the embodiment;

FIG. 7 is a view illustrating an example in which the local route (trajectory) of the moving object according to the embodiment is configured by combining a clothoid curve and a curvature change point;

FIG. 8 is a view illustrating a cost function according to the embodiment;

FIG. 9 is a flowchart illustrating a series of operations of travel control processing of the moving object according to the embodiment; and

FIG. 10 is a flowchart illustrating a series of operations regarding generation of a grid map according to the embodiment.

DESCRIPTION OF THE EMBODIMENTS

Hereinafter, embodiments will be described in detail with reference to the attached drawings. Note that the following embodiments are not intended to limit the scope of the claimed invention, and limitation is not made an invention that requires all combinations of features described in the embodiments. Two or more of the multiple features described in the embodiments may be combined as appropriate. Furthermore, the same reference numerals are given to the same or similar configurations, and redundant description thereof is omitted.

In the following embodiment, as an example of a moving object that is a micro mobility vehicle, an ultra-compact electric vehicle having a riding capacity of one person or so will be described as an example. However, micro mobility vehicles may include any vehicle that travels carrying baggage along with a person, instead of carrying the person. In addition, the present embodiment is not limited to the example in which the moving object is an electric vehicle, and is applicable to any moving object other than the electric vehicle. Furthermore, in the following description, a moving object having one driven wheel will be described as an example, but the driven wheel is not necessarily provided, and the number of driven wheels is not limited to one and may be two or more.

In the above-described moving object such as the micro mobility vehicle, it is advantageous if autonomous traveling is achieved in consideration of riding of a person, frequent changes in target position, and non-use of a high-precision map. The micro mobility vehicle does not always travel a specific fixed route, and it is necessary to appropriately travel even in a region where a high-precision map is not prepared in order to be capable of traveling in both moving regions of vehicles and moving regions of pedestrians. Furthermore, for example, as in the case of traveling in a shopping mall or an event venue, there is a need to travel while appropriately avoiding a plurality of obstacles in a situation where the obstacles are irregularly present. It is assumed that not only a static obstacle that does not move but also an obstacle whose position dynamically changes, such as a pedestrian, a bicycle, or another vehicle, is present in an advancing direction of the micro mobility vehicle. That is, the micro mobility vehicle needs to travel along a traveling trajectory with a high degree of freedom to flexibly avoid various obstacles. Meanwhile, since there is a case where a person rides on the micro mobility vehicle, the traveling trajectory for avoiding obstacles needs to be a traveling trajectory in consideration of ride comfort.

A moving object 100 according to the present embodiment autonomously travels toward a target position while avoiding obstacles without using a high-precision map. In order to enable the autonomous traveling without using the high-precision map, a region where the moving object 100 can travel is identified using information recognized from outputs of detection units to be described later. As will be described later, the moving object 100 generates a grid map representing a travelable region and a non-travelable region of the moving object 100. In the present embodiment, the grid map capable of considering both the static obstacle and the dynamic obstacle is generated and used to generate a trajectory of the moving object 100. Furthermore, the moving object 100 generates the trajectory having a high degree of freedom and taking ride comfort into consideration using a clothoid curve provided with a point (hereinafter, simply referred to as a curvature change point) at which a curvature changes non-linearly. The moving object 100 controls a drive system so as to travel along the generated trajectory.

<Configuration of Moving Object>

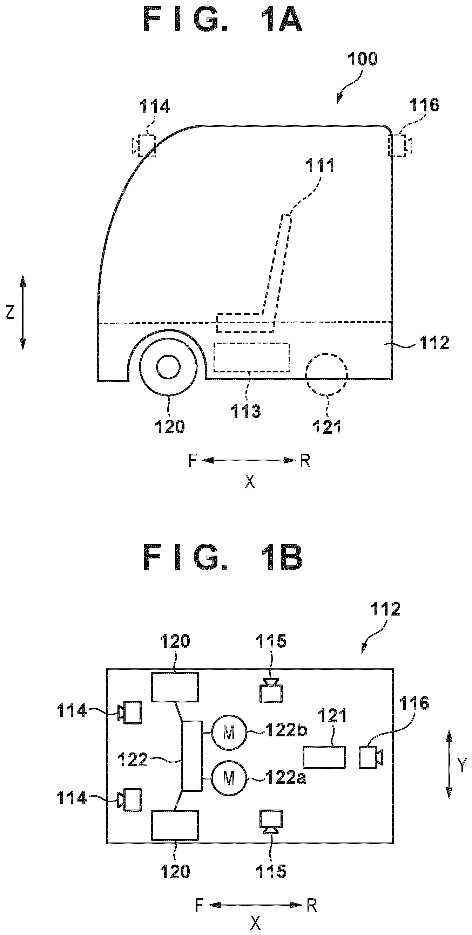

A configuration of the moving object 100 will be described with reference to FIGS. 1A and 1B. FIG. 1A illustrates a side view of the moving object 100 according to the present embodiment, and FIG. 1B illustrates an internal configuration of the moving object 100. In the drawings, an arrow X indicates a front-and-rear direction of the moving object 100, and F indicates the front, and R indicates the rear. Arrows Y and Z respectively indicate a width direction (a left-and-right direction) and an up-and-down direction of the moving object 100.

The moving object 100 is an electric autonomous vehicle including a traveling unit 112 and using a battery 113 as a main power supply. The battery 113 is, for example, a secondary battery such as a lithium ion battery, and the moving object 100 autonomously travels by the traveling unit 112 with electric power supplied from the battery 113. The traveling unit 112 has a form of a three-wheeled vehicle including a pair of left and right drive wheels 120, which are front wheels, and one driven wheel 121, which is a rear wheel. As described above, the rear wheel may be a drive wheel. Note that the traveling unit 112 may have another form such as a form of a four-wheeled vehicle. The moving object 100 includes, for example, a single seat 111.

The traveling unit 112 includes a drive mechanism 122. The drive mechanism 122 is a mechanism that rotates the corresponding drive wheels 120 with motors 122a and 122b as drive sources. By rotating each of the drive wheels 120, the drive mechanism 122 is capable of moving the moving object 100 forward or backward. The drive mechanism 122 can also change the advancing direction of the moving object 100 by generating a difference in rotation between the motors 122a and 122b. The traveling unit 112 includes the driven wheel 121. The driven wheel is capable of making a turn with the Z direction as a rotation axis.

The moving object 100 includes detection units 114 to 116, each of which detects a target object in the periphery of the moving object 100. The detection units 114 to 116 are an external sensor group that monitors the periphery of the moving object 100. In the case of the present embodiment, each of the detection units 114 to 116 is an imaging device that captures an image of the periphery of the moving object 100, and includes, for example, an optical system such as a lens and an image sensor. However, instead of or in addition to the imaging device, a radar or a light detection and ranging (LIDAR) can also be used.

For example, two detection units 114 are disposed in a front portion of the moving object 100 to be spaced apart from each other in Y direction, and are mainly used to detect a target object in front of the moving object 100. The detection units 115 are disposed in a left portion and a right portion of the moving object 100, and are mainly used to detect target objects on lateral sides of the moving object 100. The detection unit 116 is disposed in a rear portion of the moving object 100, and is mainly used to detect a target object behind the moving object 100.

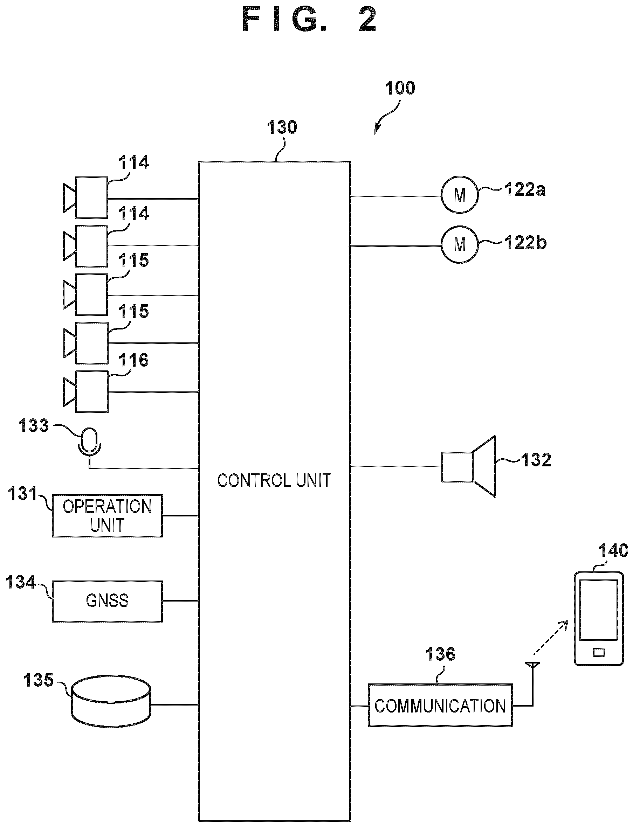

FIG. 2 is a block diagram of a control system of the moving object 100. The moving object 100 includes a control unit (ECU) 130. The control unit 130 includes one or more processors represented by a CPU, a memory device such as a semiconductor memory, an interface with an external device, and the like. The memory device stores programs to be executed by the processors, data to be used by the processors for processing, and the like. A plurality of sets of the processor, the memory device, and the interface may be provided for an individual function of the moving object 100 to be capable of communicating with each other.

The control unit 130 obtains outputs (for example, image information) from the detection units 114 to 116, input information into an operation unit 131, voice information input from a voice input device 133, and the like, and performs processing corresponding to each piece of the information. The control unit 130 performs control of the motors 122a and 122b (travel control of the traveling unit 112) and display control of a display panel included in the operation unit 131, gives a notification to an occupant of the moving object 100 by voice, and outputs information. The control unit 130 may perform processing using a machine learning model for image recognition (for example, a deep neural network) on the outputs (for example, image information) from the detection units 114 to 116. In addition, the control unit 130 may perform processing using a machine learning model for voice recognition (for example, a deep neural network) on the output (for example, voice information) from the voice input device 133.

The voice input device 133 includes, for example, a microphone, and collects a voice of the occupant of the moving object 100. The control unit 130 can recognize the input voice and perform corresponding processing. A global navigation satellite system (GNSS) sensor 134 receives a GNSS signal, and detects a current position of the moving object 100.

A storage device 135 includes a nonvolatile recording medium that stores various pieces of data. The storage device 135 may also store programs to be executed by the processors, data to be used by the processors for processing, and the like. The storage device 135 may store various parameters (for example, trained parameters of a deep neural network, hyperparameters, and the like) of the machine learning model for voice recognition or image recognition to be executed by the control unit 130.

A communication device 136 is a communication device capable of communicating with an external device (for example, an external server or a communication terminal 140 owned by a user) via wireless communication, such as Wi-Fi or 5th generation mobile communication.

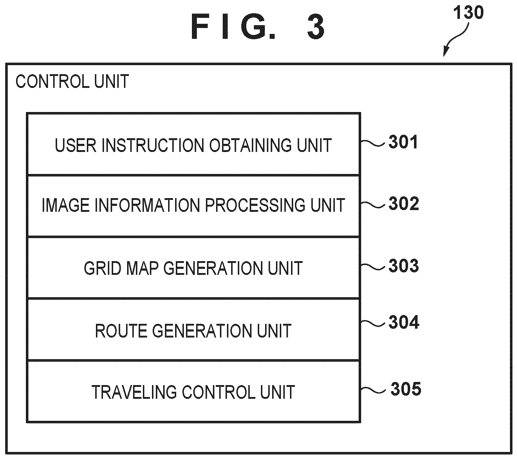

Next, a functional configuration example related to the control unit 130 will be described with reference to FIG. 3. A user instruction obtaining unit 301 obtains a user instruction to be input via the operation unit 131 or the voice input device 133. The user instruction includes, for example, designation of a final target position at which the moving object 100 should arrive. The final target position may be a position of a target object designated by an utterance voice among target objects recognized in images output by the detection units 114 to 116. In addition, the user instruction may include a change instruction for the traveling trajectory, such as a right turn or a left turn, during traveling of the moving object 100.

An image information processing unit 302 recognizes positions, shapes, and the like of a traveling path and an obstacle based on the outputs (for example, image information) of the detection units 114 to 116. The recognition of the positions, shapes, and the like of the traveling path and the obstacle in front of the moving object 100 is performed, for example, by obtaining a depth distance from the moving object 100 using a stereo image obtained from the two detection units 114. In addition, the image information processing unit 302 recognizes a dynamic obstacle such as a traffic participant using, for example, a monocular image. In the following description, unless otherwise specified, the recognition of the traveling path, recognition of a static obstacle, and the recognition of the dynamic obstacle are also simply referred to as obstacle recognition.

In addition, the image information processing unit 302 can predict a movement trajectory of the dynamic obstacle such as the traffic participant by using, for example, (for example, monocular) images obtained in time series. The image information processing unit 302 predicts, for example, a position, a moving speed, and/or acceleration of the dynamic obstacle, and outputs information on predicted time-series positions for the dynamic obstacle. In the following description, unless otherwise specified, the prediction of the position, moving speed, and/or acceleration of the dynamic obstacle is also simply referred to as movement prediction. The image information processing unit 302 can use, for example, a machine learning model (for example, a deep neural network) for image recognition trained in advance for obstacle recognition and movement prediction.

A grid map generation unit 303 generates a grid map representing a travelable region and a non-travelable region of the moving object 100 in the vicinity of the moving object 100 based on results of obstacle recognition and movement prediction performed by the image information processing unit 302. The grid map generation unit 303 shifts and updates the grid map as needed such that the moving object is located at the center of the grid map along with the movement of the moving object 100.

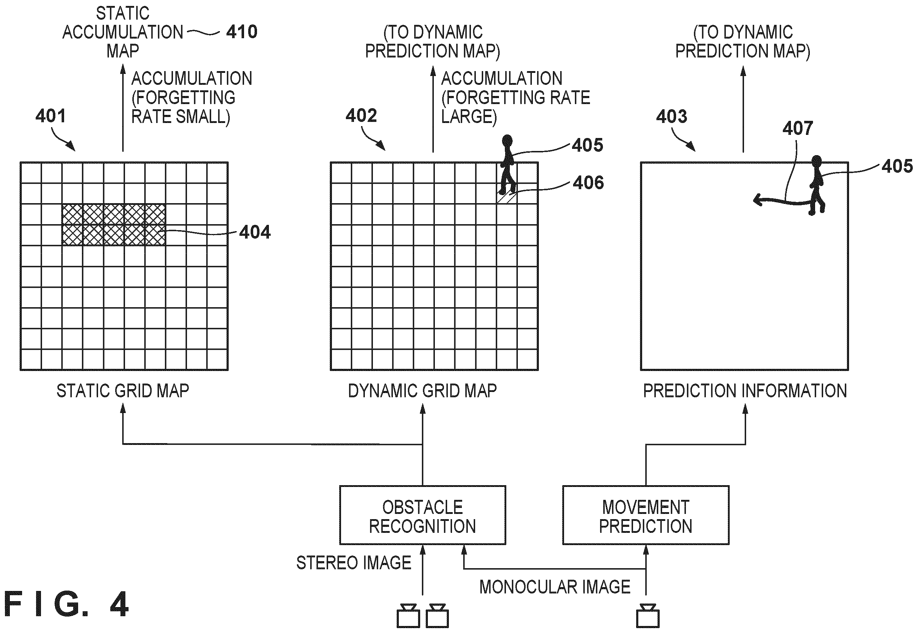

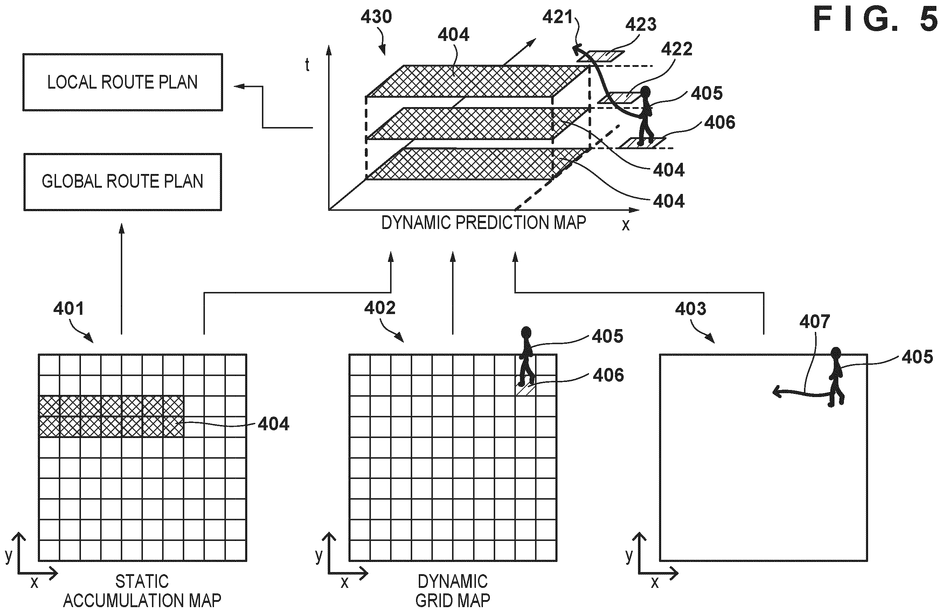

FIGS. 4 and 5 schematically illustrate an example of generation of a grid map according to the present embodiment.

The grid map generation unit 303 generates a static grid map 401 using a result of obstacle recognition. The static grid map 401 is information indicating a position of the static obstacle on a grid-like map. The grid map generation unit 303 assigns a non-travelable region 404 to corresponding grid cells in the static grid map 401 according to a recognition result of the image information processing unit 302. For example, in a case where it is recognized that an object is present at a predetermined height (for example, height at which the moving object 100 cannot advance) from the ground surface, the grid map generation unit 303 sets a region corresponding to a position at which the object is recognized as a non-travelable region. The grid map generation unit 303 generates a static accumulation map 410 by accumulating the non-travelable region 404 along with the movement of the moving object 100. The grid map generation unit 303 sets a small forgetting rate for the non-travelable region 404, so that the non-travelable region 404 remains at a corresponding position on grid cells even after a predetermined time (for example, several minutes to several hours) has elapsed.

In addition, the grid map generation unit 303 generates a dynamic grid map 402 using a result of obstacle recognition. The dynamic grid map 402 is information indicating a position of the dynamic obstacle on a grid map. The grid map generation unit 303 assigns the position of the dynamic obstacle to corresponding grid cells of the dynamic grid map 402 as a non-travelable region 406 according to a recognition result of the image information processing unit 302. For example, in a case where it is recognized that there is a pedestrian 405 who is a traffic participant, the grid map generation unit 303 sets a region corresponding to a position where the pedestrian is recognized as the non-travelable region 406.

Since the position of the dynamic obstacle can change with the lapse of time, the grid map generation unit 303 sets a large forgetting rate for the non-travelable region 406. The grid map generation unit 303 may erase the non-travelable region 406 when a time of several tens of ms, for example, elapses. In a case where the dynamic obstacle moves, after the time of several tens of ms, for example, elapses, the non-travelable region 406 corresponding to a position of the dynamic obstacle moves to a nearby grid cell (the dynamic obstacle appears at a position of the nearby grid cell).

The grid map generation unit 303 generates prediction information 403 based on a result of movement prediction. The prediction information 403 includes a movement trajectory 407 for each dynamic obstacle (for example, the pedestrian 405 who is the traffic participant). The movement trajectory 407 is information on predicted time-series positions of the dynamic obstacle. The movement trajectory 407 can be represented by, for example, a position (x, y) on two-dimensional grid cells at each time change $(t_1, t_2, t_3, \cdots t_n)$.

As described above, the grid map generation unit 303 generates a static grid map (the static grid map 401 or the static accumulation map 410) indicating the position of the static obstacle recognized based on the image information, a dynamic grid map (the dynamic grid map 402) indicating the position of the dynamic obstacle recognized based on the image information, and information (the prediction information 403) on the predicted time-series positions of the dynamic obstacle. Then, the grid map generation unit 303 generates a dynamic prediction map 430 illustrated in FIG. 5 using these pieces of information.

The dynamic prediction map 430 is configured such that grid maps (configured by an x-y plane) at different times are associated with a time-axis direction (direction of t) perpendicular to the x-y plane. At this time, the grid map generation unit 303 combines the static accumulation map 410 and the dynamic grid map 402 at each time. As a result, in the dynamic prediction map 430, the grid map at the time $t_1$ includes the non-travelable region 404 and the non-travelable region 406 ($t_1$, $t_2$, and $t_3$ are not illustrated). In addition, the grid map at the time $t_2$ includes the non-travelable region 404 (whose position has not changed) and a non-travelable region 422. Note that the grid map generation unit 303 can obtain the non-travelable region 422 based on the movement trajectory 407. Similarly, the grid map at the time $t_3$ includes the non-travelable region 404 (whose position has not changed) and a non-travelable region 423. Note that the grid map generation unit 303 can obtain the non-travelable region 422 based on the movement trajectory 407. Positions of the non-travelable region 406, the non-travelable region 422, and the non-travelable region 423 change as time changes. A movement trajectory 421 indicates a movement trajectory 421 of the pedestrian 405 in a three-dimensional space of the dynamic prediction map.

As described above, the grid map generation unit 303 generates the dynamic prediction map 430 to include the information indicating the position of the static obstacle recognized based on the image information and the information indicating the position of the dynamic obstacle that changes with time and is recognized based on the image information. Since the dynamic prediction map 430 is generated in this manner, it is possible to integrally handle the position of the static obstacle and the positions of the dynamic obstacle. That is, it is possible to generate a map in consideration of the presence of the dynamic obstacle, and it is possible to control the moving object in consideration of the presence of the dynamic obstacle. Note that the information indicating the position of the dynamic obstacle that changes with time includes, for example, the information on the predicted time-series positions of the dynamic obstacle (the positions of the non-travelable regions 406, 422, and 423 associated with $t_1$, $t_2$, and $t_3$, respectively). As the predicted time-series positions of the dynamic obstacle are used, it is possible to generate a trajectory that avoids entry to a position where the dynamic obstacle is to move.

A route generation unit 304 executes processing of generating a trajectory and determining control amounts, which will be described later, and generates a trajectory (traveling trajectory) on which the moving object 100 travels. Note that the traveling trajectory generated by the route generation unit 304 according to the present embodiment is referred to as a local route with respect to a global route, which will be described later. The route generation unit 304 can generate the trajectory based on the target position by referring to the global route. Note that the global route is a reference route for heading to the target position in which a rough indication of the traveling trajectory of the moving object is determined. For example, the route generation unit 304 can generate the global route so as not to interfere with the non-travelable region illustrated in the static accumulation map 410. When the static accumulation map 410 in which the update speed of the non-travelable region is slow is used in this manner, a stable route can be generated. Note that the target position in the present embodiment is different from the final target position designated by the user, and is a temporary position that is a target to be reached when the trajectory on which the moving object 100 travels is determined at regular time intervals. The target position is set on the global route. The maximum distance from the position of the moving object to the target position may be set according to a range in which an obstacle can be detected by the detection units, for example, 6 meters. That is, the route generation unit 304 can limit the traveling trajectory within a range in which the moving object can sufficiently detect an obstacle and the like. Furthermore, the maximum distance from the position of the moving object to the target position may be set according to, for example, a braking distance by which the moving object 100 can control traveling in an emergency. That is, the route generation unit 304 can limit the traveling trajectory within a range in which the moving object 100 can be sufficiently controlled to stop or the like. Furthermore, the target position may be set closer to the moving object as a distance to the final target position (for example, the position of the target object designated by the user) decreases.

In order to generate the traveling trajectory, the route generation unit 304 generates a trajectory configured by combining a plurality of clothoid curves and a curvature change point at which a curvature changes non-linearly. The clothoid curve is a curve in which a curvature of the trajectory changes linearly with respect to the distance. In general, the clothoid curve is also known as a trajectory drawn by a vehicle in a case where the vehicle equipped with a steering wheel rotates the steering wheel at a constant rate when the vehicle travels at a constant speed. In the present embodiment, the trajectory is configured by combining a plurality of trajectories in which a curvature of each of the trajectories changes linearly and the curvature change point at which the curvature changes non-linearly, so that it is possible to generate a complicated trajectory with a high degree of freedom that meanders left and right. That is, with such a trajectory, even when there is a dynamic obstacle, it is possible to avoid the obstacle by meandering left and right.

In addition, the above-described trajectory is configured to correspond to, for example, generating a trajectory of a vehicle equipped with a steering wheel in which the steering wheel is rotated at a constant rate in the vehicle and then the steering wheel is rotated in a different constant rotation manner after the curvature change point. That is, even in the case of generating the trajectory with a high degree of freedom, since the curvature of the trajectory changes smoothly, it is possible to ensure the ride comfort of the occupant riding on the moving object. By adjusting curvatures at three points on the trajectory, the route generation unit 304 can suppress frequent switching of a turning direction of the moving object 100, and can further consider a motion constraint of the moving object 100 such as the minimum turning radius.

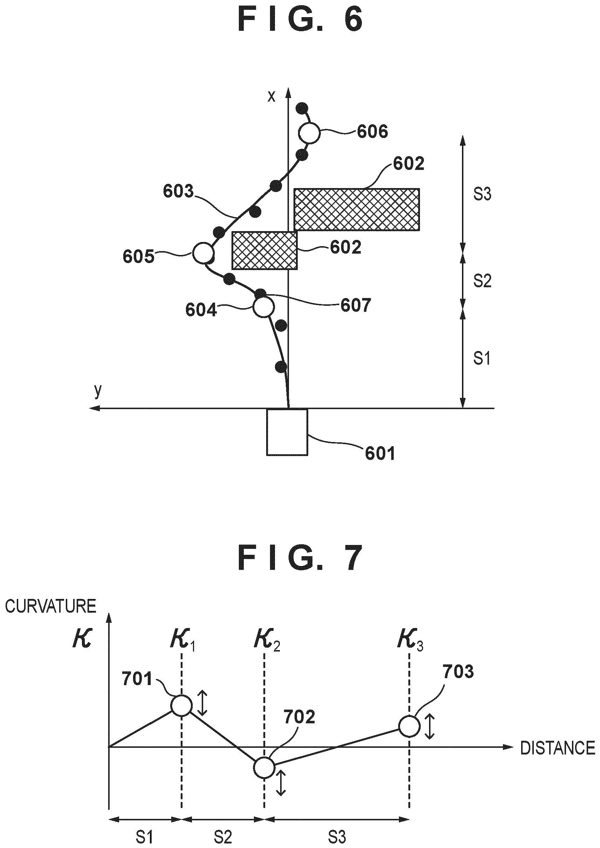

FIG. 6 schematically illustrates an example of a trajectory 603 on which a moving object 601 travels. An obstacle 602 exists in front of the moving object 601 in an advancing direction (X direction). Note that a Y direction indicates a left-and-right direction with respect to the advancing direction of the moving object. The trajectory 603 includes a plurality of clothoid curves and a plurality of curvature change points 604 to 606. As described above, the plurality of clothoid curves and the plurality of curvature change points enable the route generation unit 304 to generate the trajectory 603 that does not significantly deviate from a global route 607 even if the global route 607 (indicated by a group of points) is a complicated route. Note that S1 to S3 indicate distances between adjacent curvature change points among the curvature change points 604 to 606. The distances may be set at equal intervals or may be set to optimum distances determined in advance by an experiment or the like.

FIG. 7 illustrates a relationship between a distance from the moving object and a curvature of a trajectory for generating the trajectory 603. As illustrated in FIG. 7, in the trajectory 603 generated in the present embodiment, the curvature changes at a constant rate (that is, linearly) up to the maximum point or the minimum point (curvature change point) of the curvature.

In the present embodiment, a case where curvatures (curvatures $\kappa_1$, $\kappa_2$ and $\kappa_3$) of the trajectory at positions of three curvature change points on the trajectory are optimized will be described as an example. Although it is also possible to use more curvature change points, if the number of curvature change points to be adjusted increases, the amount of calculation related to optimization using a cost function to be described later may dramatically increase. That is, the amount of calculation greatly increases with respect to improvement in the degree of freedom of a traveling trajectory to be obtained. The route generation unit 304 can suppress the amount of calculation for optimization while generating the traveling trajectory with a high degree of freedom by using the three curvature change points. It is possible to repeatedly generate the traveling trajectory in a shorter cycle (for example, in real time) by appropriately suppressing the number of curvature change points.

An outline of trajectory generation processing by the route generation unit 304 will be described. The route generation unit 304 substitutes a trajectory obtained by varying the curvatures of the three points into the cost function, and obtains curvatures of the curvature change points with which the cost by the cost function is reduced. For example, assuming that $C_{poserr}$ is a cost of deviation from a global route, $C_{obstacle}$ is a cost of approach to and collision with an obstacle, and $C_{oscillation}$ is a cost of difference from a trajectory generated previously (for example, in the previous time), the cost function is expressed by Formula (1). Regarding the cost of deviation from the global route, the global route is referred to, and the cost is increased as a deviation of a trajectory to be generated from the global route increases. Therefore, it is possible to generate a trajectory that does not greatly deviate from the global route even in the case of generating a trajectory with a high degree of freedom. Regarding the cost of difference from the previously generated trajectory, the cost decreases as a difference from the trajectory generated previously (for example, in the previous time) decreases. For example, the route generation unit 304 uses a cost function in which a curvature of the trajectory generated a predetermined time ago is referred to and the cost increases as a change of a curvature of the trajectory to be generated from the curvature of the trajectory generated the predetermined time ago is larger. For this reason, it is possible to suppress an abrupt change in the trajectory by using the cost of difference from the previously generated trajectory. The route generation unit 304 selects a curvature $\kappa = \{\kappa_1, \kappa_2, \kappa_3\}$ that minimizes the cost function of Formula (1). For example, the curvature $\kappa_1$ corresponds to the curvature at a curvature change point 701, the curvature $\kappa_2$ corresponds to a curvature at a curvature change point 702, and the curvature $\kappa_3$ corresponds to a curvature at a curvature change point 703. Then, the respective costs ($C_{poserr}$, $C_{obstacle}$, $C_{oscillation}$) constituting Formula (1) are calculated according to Formulas (2) to (4), respectively.

[Mathematical Formula 1]

$$L(\kappa) \quad = \quad \alpha C_{poserr}(\kappa) + \beta C_{obstacle}(\kappa) + \gamma C_{oscillation}(\kappa) \qquad (1)$$

$\kappa = (\kappa_1, \kappa_2, \kappa_3)$
$\alpha, \beta, \gamma : constant$

[Mathematical Formula 2]

$$C_{poserr} \quad = \quad \sum [A_{gp} \circ A_{lp}(\kappa)](i) \qquad (2)$$

$\circ : Hadamard\ product\ of\ matrix$

[Mathematical Formula 3]

$$C_{obstacle} \quad = \quad \sum [A_{obs} \circ A_{lp}(\kappa)](i) \qquad (3)$$

[Mathematical Formula 4]

$$C_{oscillation} \quad = \quad |d\kappa/dt|^2 \qquad (4)$$

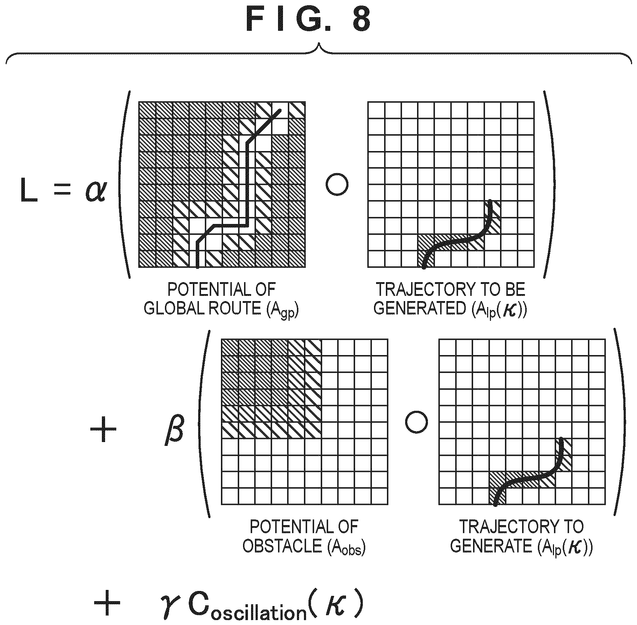

FIG. 8 schematically illustrates the cost function according to the present embodiment illustrated in Formula (1). For example, the cost of deviation from the global route, which is $C_{poserr}$, is calculated by calculating the trajectory to be generated and a value obtained by assigning a potential of the global route to grid cells. Regarding the potential of the global route, a higher cost is assigned to a grid cell, for example, as a distance from the global route is farther. By using such a potential, the curvature change points are optimized such that the trajectory to be generated is close to the global route. In addition, the cost of approach to and collision with the obstacle, which is a $C_{obstacle}$, is calculated by calculating the trajectory to be generated and a value obtained by assigning a potential of the obstacle to the grid cells. Regarding the potential of the obstacle, for example, a higher cost is assigned as a distance to a non-travelable region of a grid map is closer. By using such a potential, the curvature change points are optimized such that the trajectory to be generated avoids the obstacle. In varying the curvatures of the curvature change points, the route generation unit 304 performs the optimization by Adam using a loss gradient to determine the curvature of the curvature change point (next in the iterative calculation). The route generation unit 304 repeats the cost calculation illustrated in Formula (1) using the trajectories generated by varying the curvatures of the curvature change points to determine $\kappa = \{\kappa_1, \kappa_2, \kappa_3\}$ with which a cost L is the lowest. As described above, the route generation unit 304 generates the trajectory (local route) based on the trajectory of the global route and the position of the dynamic obstacle that changes with time and is included in the dynamic prediction map. In this manner, it is possible to accurately and stably generate the trajectory that avoids entry to the position where the dynamic obstacle is to move.

Note that an example in which each of the potential of the global route and the potential of the obstacle is expressed using a cost grid has been described in the example illustrated in FIG. 8. The cost grid may be configured with the same number of grid cells as the grid map. As described above, each grid cell of the cost grid is associated with a cost value according to the distance from the global route or the distance from the obstacle. A plurality of the cost grids can be added by, for example, integrating values of corresponding grids. In the cost grid that handles the potential of the global route, for example, in a case where the global route is projected onto a grid plane, a lower cost value is set for a grid cell closer to the global route.

Furthermore, the route generation unit 304 performs processing of determining control amounts using the determined trajectory, and determines a velocity v and an angular velocity $\omega$ which serve as the control amounts for controlling traveling of the moving object. The processing of determining the control amounts is processing of determining the velocity v and the angular velocity $\omega$ so as to satisfy a predetermined constraint for performing traveling according to the generated trajectory. The predetermined constraint is, for example, a constraint for enabling the moving object 100 to safely make a curve and securing stable ride comfort.

The travel control unit 305 controls the traveling of the moving object 100 (for example, controls the motors 122a and 122b) according to the control amounts determined by the route generation unit 304.

<Series of Operations of Travel Control Processing in Moving Object 100>

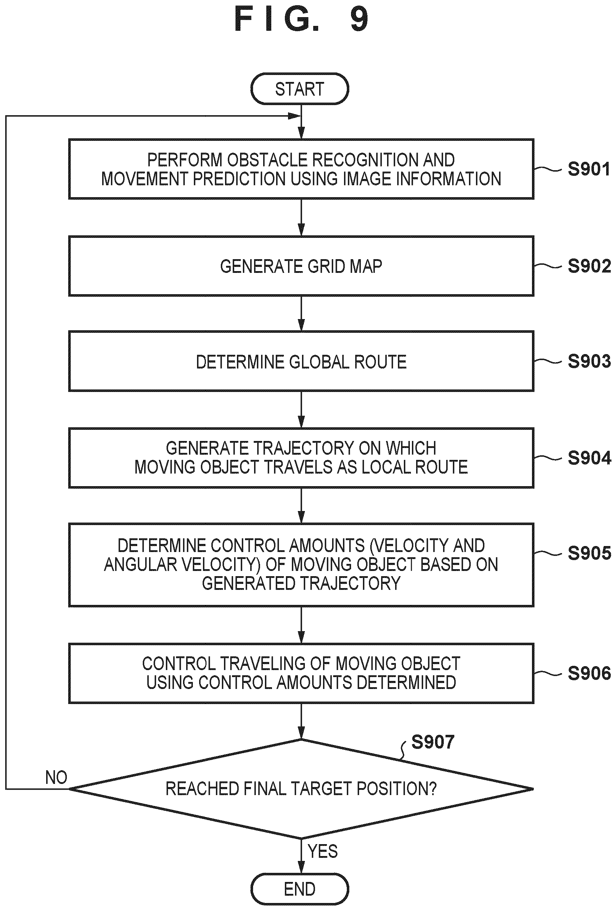

Next, a series of operations of travel control processing in the moving object 100 will be described with reference to FIG. 9. Note that this processing is realized as the control unit 130 develops and executes a program stored in the storage device 135 on the memory device of the control unit 130. Furthermore, a final target position is set according to a user instruction or the like at the start of this processing.

In S901, the image information processing unit 302 of the control unit 130 executes the above-described obstacle recognition and movement prediction by, for example, a deep neural network using outputs (image information) of the detection units 114 to 116.

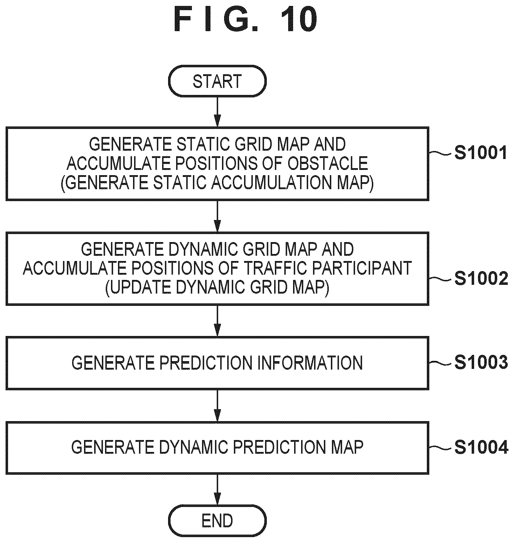

In S902, the grid map generation unit 303 of the control unit 130 generates a dynamic prediction map, described with reference to FIGS. 4 and 5, by grid map generation processing. The grid map generation processing will be described later with reference to FIG. 10.

In S903, the route generation unit 304 of the control unit 130 determines a global route. The route generation unit 304 determines the global route using a static accumulation map as described above. The route generation unit 304 can determine the global route that does not interfere with an obstacle (non-travelable region) on the static accumulation map using, for example, A* algorithm, but may determine the global route by another method.

In S904, the route generation unit 304 of the control unit 130 generates a trajectory (local route) on which the moving object travels and which includes clothoid curves as described above. Specifically, first, the route generation unit 304 calculates an initial curvature of a curvature change point of the clothoid curves using the global route. Specifically, the route generation unit 304 first sets a route close to the global route as an initial route without considering the presence of the obstacle. This route corresponds to calculating the curvature of the curvature change point by performing optimization calculation using only $C_{poserr}$ in the above Formula (1). The route generation unit 304 may use only $C_{poserr}$ and $C_{oscillation}$. By performing the processing of this step, the possibility that the curvature of the local route determined by the optimization calculation falls into a local solution can be reduced, and a more accurate optimal solution can be obtained. Next, the route generation unit 304 calculates the curvature change point of the clothoid curves (performs the optimization calculation) using the global route, the dynamic prediction map, and a past route. That is, the route generation unit 304 obtains, for example, curvatures at three curvature change points (generates the trajectory) by the above-described method using the respective costs ($C_{poserr}$, $C_{obstacle}$, $C_{oscillation}$) constituting the above-described Formula (1).

In S905, the route generation unit 304 of the control unit 130 generates control amounts (the velocity v and the angular velocity $\omega$) of the moving object 100 based on the generated trajectory. Any method may be used for the processing of determining the control amounts based on the generated trajectory.

In S906, the travel control unit 305 of the control unit 130 controls the motors 122a and 122b using the control amounts (the velocity v and the angular velocity $\omega$) determined by the route generation unit 304 to control traveling of the moving object 100.

In S907, the control unit 130 determines whether the final target position is reached. In a case where it is determined that the final target position is not reached, the control unit 130 returns the processing to S901 and repeats the processing. In a case where it is determined that the final target position is reached, the control unit 130 terminates the series of processing.

<Series of Operations of Grid Map Generation Processing in Moving Object 100>

Next, a series of operations of the grid map generation processing executed by the grid map generation unit 303 will be described. Note that this processing is realized as the control unit 130 develops and executes a program stored in the storage device 135 on the memory device of the control unit 130. Note that this processing is started when the above-described S902 is executed.

In S1001, the grid map generation unit 303 generates a static grid map using a position of a static obstacle obtained by obstacle recognition as described with reference to FIG. 4. The grid map generation unit 303 generates a static accumulation map by accumulating the positions of static obstacle with the lapse of time. In order to generate the static accumulation map, the grid map generation unit 303 uses a forgetting rate smaller than a forgetting rate used in a dynamic grid map.

In S1002, the grid map generation unit 303 generates the dynamic grid map using a position of a dynamic obstacle obtained by the obstacle recognition as described with reference to FIG. 4. In addition, in S1003, the grid map generation unit 303 generates prediction information using a result of movement prediction as described with reference to FIG. 4.

In S1004, the grid map generation unit 303 generates a dynamic prediction map using the static accumulation map, the dynamic grid map, and the prediction information as described with reference to FIG. 5. After the dynamic prediction map is generated, the grid map generation unit 303 returns the processing to a caller (terminates the present processing).

As described above, in the above-described embodiment, the moving object 100 generates the dynamic prediction map including information indicating the position of the static obstacle recognized based on information of a sensor (for example, image information) and information indicating the position of the dynamic obstacle that changes with time and is recognized based on the information of the sensor. Then, using the generated dynamic prediction map, a target trajectory for controlling traveling of the moving object is generated. In this manner, it is possible to generate the map in consideration of the presence of the dynamic obstacle, and it is possible to control the moving object in consideration of the presence of the dynamic obstacle. In addition, the moving object 100 generates the dynamic prediction map using a first map indicating the position of the static obstacle recognized based on the information of the sensor, a second map indicating the position of the dynamic obstacle recognized based on the information of the sensor, and the information on predicted time-series positions of the dynamic obstacle. When the map is generated in consideration of the presence of the dynamic obstacle, the position information of the static obstacle, the position information of the dynamic obstacle, and a predicted trajectory of the dynamic obstacle can be easily integrated. In addition, it is possible to generate the trajectory that avoids entry to a position where the dynamic obstacle is to move.

In this manner, it is possible to further control the moving object in consideration of safety and ride comfort, and it is possible to reduce a load applied to the occupant by acceleration or turning.

Note that the configuration of the above-described control unit 130 may function in various forms as a moving object control system. For example, the moving object control system may be configured in a form in which at least a part of the above-described control unit 130 is configured on a device outside the moving object 100, for example, an external server. Alternatively, the moving object control system may be the moving object 100, or may be incorporated into the moving object 100 (that is, may be the control unit 130). Furthermore, a computer program for operating the above-described moving object 100 may be a computer program for causing one or more computers to function as each unit of the moving object control system.

<Summary of Embodiments>

The above description includes embodiments of a moving object control system, a moving object, a control method of the moving object control system, a program, and a storage medium to be described hereinafter.

(Item 1)

A moving object control system (for example, 100) that controls an operation of a moving object, the moving object control system comprising:

an obtaining unit (for example, 302) configured to obtain information of a sensor configured to recognize a periphery of the moving object;
a map generation unit (for example, 303) configured to generate a dynamic prediction map (for example, 430) including information indicating a position of a static obstacle recognized based on the information of the sensor and information indicating a position of a dynamic obstacle that changes with time and is recognized based on the information of the sensor; and

a trajectory generation unit (for example, 304) configured to generate a target trajectory for controlling traveling of the moving object by using the generated dynamic prediction map.

According to this embodiment, it is possible to generate the map in consideration of the presence of the dynamic obstacle. In addition, it is possible to control the moving object in consideration of the presence of the dynamic obstacle.

(Item 2)

The moving object control system according to item 1, wherein the map generation unit includes, into the dynamic prediction map, information on predicted time-series positions of the dynamic obstacle as the information indicating the position of the dynamic obstacle that changes with time.

According to this embodiment, it is possible to generate the trajectory that avoids entry to a position where the dynamic obstacle is to move.

(Item 3)

The moving object control system according to item 1, wherein the map generation unit generates the dynamic prediction map by using a first map (for example, 410) indicating the position of the static obstacle recognized based on the information of the sensor, a second map (for example, 402) indicating the position of the dynamic obstacle recognized based on the information of the sensor, and information (for example, 403) on predicted time-series positions of the dynamic obstacle.

According to this embodiment, it is possible to integrally handle the position of the static obstacle, the position of the dynamic obstacle, and the predicted positions of the dynamic obstacle.

(Item 4)

The moving object control system according to item 1, wherein the trajectory generation unit generates, as the target trajectory, a trajectory configured by combining a plurality of trajectories in which a curvature of each of the trajectories changes linearly with respect to a distance.

According to this embodiment, even when the dynamic obstacle is present, it is possible to avoid the obstacle by meandering left and right.

(Item 5)

The moving object control system according to item 3, wherein the trajectory generation unit generates a first trajectory of the moving object as a reference route, and generates a second trajectory configured by combining a plurality of trajectories as the target trajectory based on the first trajectory.

According to this embodiment, it is possible to accurately and stably generate the second trajectory having a high degree of freedom using the curvature.

(Item 6)

The moving object control system according to item 5, wherein the trajectory generation unit generates the first trajectory of the moving object based on the position of the static obstacle indicated on the first map.

According to this embodiment, it is possible to generate a stable route by using the static accumulation map 410 in which the position of the obstacle is stable.

(Item 7)

The moving object control system according to item 5, wherein the trajectory generation unit generates the second trajectory based on the first trajectory and the position of the dynamic obstacle that changes with time and is included in the dynamic prediction map.

According to this embodiment, it is possible to accurately and stably generate the trajectory that avoids the entry to the position where the dynamic obstacle is to move.

(Item 8)

The moving object control system according to item 4, wherein the trajectory generation unit generates, as the target trajectory, a trajectory from a position of the moving object to a target position, the trajectory being configured by combining a plurality of trajectories in which a curvature of each of the trajectories changes linearly with respect to a distance and a curvature change point at which the curvature changes non-linearly.

According to this embodiment, even in the case of generating the trajectory with a high degree of freedom, since the curvature of the trajectory changes smoothly, it is possible to ensure ride comfort of an occupant riding on the moving object.

(Item 9)

The moving object control system according to item 8, wherein a trajectory on which the moving object needs to travel has three of the curvature change points.

According to this embodiment, it is possible to suppress an amount of calculation for optimization while generating a traveling trajectory with a high degree of freedom by using the three curvature change points.

(Item 10)

The moving object control system according to item 1, wherein the information of the sensor is image information captured by an imaging unit of the moving object,
the moving object control system further comprising a prediction unit configured to predict, based on the image information, the position of the dynamic obstacle that changes with time.

(Item 11)

A moving object comprising:

an obtaining unit configured to obtain information of a sensor configured to recognize a periphery of the moving object;
a map generation unit configured to generate a dynamic prediction map including information indicating a position of a static obstacle recognized based on the information of the sensor and information indicating a position of a dynamic obstacle that changes with time and is recognized based on the information of the sensor;
a trajectory generation unit configured to generate a target trajectory for controlling traveling of the moving object by using the generated dynamic prediction map; and
a control unit configured to control a drive device of the moving object to cause the moving object to travel along the target trajectory.

According to this embodiment, it is possible to generate the map in consideration of the presence of the dynamic obstacle. In addition, it is possible to control the moving object in consideration of the presence of the dynamic obstacle.

(Item 12)

A control method of a moving object control system that controls an operation of a moving object, the control method comprising:

obtaining information of a sensor configured to recognize a periphery of the moving object;
generating a dynamic prediction map including information indicating a position of a static obstacle recognized based on the information of the sensor and information indicating a position of a dynamic obstacle that changes with time and is recognized based on the information of the sensor; and
generating a target trajectory for controlling traveling of the moving object by using the generated dynamic prediction map.

According to this embodiment, it is possible to generate the map in consideration of the presence of the dynamic obstacle. In addition, it is possible to control the moving object in consideration of the presence of the dynamic obstacle.

(Item 13)

A program for causing a computer to function as each unit of the moving object control system according to any one of items 1 to 10.

According to this embodiment, it is possible to generate the map in consideration of the presence of the dynamic obstacle. In addition, it is possible to control the moving object in consideration of the presence of the dynamic obstacle.

(Item 14)

A storage medium storing a program for causing a computer to function as each unit of the moving object control system according to any one of items 1 to 10.

According to this embodiment, it is possible to generate the map in consideration of the presence of the dynamic obstacle. In addition, it is possible to control the moving object in consideration of the presence of the dynamic obstacle.

The invention is not limited to the foregoing embodiments, and various variations/changes are possible within the spirit of the invention.

**Claims**

1. A moving object control system (100) that controls an operation of a moving object, the moving object control system comprising:

   obtaining means (302) for obtaining information of a sensor configured to recognize a periphery of the moving object;
   map generation means (303) for generating a dynamic prediction map (430) including information indicating a position of a static obstacle recognized based on the information of the sensor and information indicating a position of a dynamic obstacle that changes with time and is recognized based on the information of the sensor; and
   trajectory generation means (304) for generating a target trajectory for controlling traveling of the moving object by using the generated dynamic prediction map.

2. The moving object control system according to claim 1, wherein the map generation means includes, into the dynamic prediction map, information on predicted time-series positions of the dynamic obstacle as the information indicating the position of the dynamic obstacle that changes with time.

3. The moving object control system according to claim 1, wherein the map generation means generates the dynamic prediction map by using a first map indicating the position of the static obstacle recognized based on the information of the sensor, a second map indicating the position of the dynamic obstacle recognized based on the information of the sensor, and information on predicted time-series positions of the dynamic obstacle.

4. The moving object control system according to claim 1, wherein the trajectory generation means generates, as the target trajectory, a trajectory configured by combining a plurality of trajectories in which a curvature of each of the trajectories changes linearly with respect to a distance.

5. The moving object control system according to claim 3, wherein the trajectory generation means generates a first trajectory of the moving object as a reference route, and generates a second trajectory configured by combining a plurality of trajectories as the target trajectory based on the first trajectory.

6. The moving object control system according to claim 5, wherein the trajectory generation means generates the first trajectory of the moving object based on the position of the static obstacle indicated on the first map.

7. The moving object control system according to claim 5, wherein the trajectory generation means generates the second trajectory based on the first trajectory and the position of the dynamic obstacle that changes with time and is included in the dynamic prediction map.

8. The moving object control system according to claim 4, wherein the trajectory generation means generates, as the target trajectory, a trajectory from a position of the moving object to a target position, the trajectory being configured by combining a plurality of trajectories in which a curvature of each of the trajectories changes linearly with respect to a distance and a curvature change point at which the curvature changes non-linearly.

9. The moving object control system according to claim 8, wherein a trajectory on which the moving object needs to travel has three of the curvature change points.

10. The moving object control system according to claim 1, wherein the information of the sensor is image information captured by an imaging means of the moving object,
the moving object control system further comprising prediction means for predicting, based on the image information, the position of the dynamic obstacle that changes with time.

11. A moving object comprising:

obtaining means for obtaining information of a sensor configured to recognize a periphery of the moving object;
map generation means for generating a dynamic prediction map including information indicating a position of a static obstacle recognized based on the information of the sensor and information indicating a position of a dynamic obstacle that changes with time and is recognized based on the information of the sensor;
trajectory generation means for generating a target trajectory for controlling traveling of the moving object by using the generated dynamic prediction map; and
control means for controlling a drive device of the moving object to cause the moving object to travel along the target trajectory.

12. A control method of a moving object control system that controls an operation of a moving object, the control method comprising:

obtaining information of a sensor configured to recognize a periphery of the moving object;
generating a dynamic prediction map including information indicating a position of a static obstacle recognized based on the information of the sensor and information indicating a position of a dynamic obstacle that changes with time and is recognized based on the information of the sensor; and
generating a target trajectory for controlling traveling of the moving object by using the generated dynamic prediction map.

13. A computer readable storage medium storing a program for causing a computer to function as each means of the moving object control system according to any one of claims 1 to 10.

# FIG. 1A

# FIG. 1B

# F I G. 2

# F I G. 3

130

CONTROL UNIT

| USER INSTRUCTION OBTAINING UNIT | 301 |
| IMAGE INFORMATION PROCESSING UNIT | 302 |
| GRID MAP GENERATION UNIT | 303 |
| ROUTE GENERATION UNIT | 304 |
| TRAVELING CONTROL UNIT | 305 |

F I G. 4

**F I G. 5**

# F I G. 6

# F I G. 7

# F I G. 8

$$L = \alpha \left( \begin{array}{c} \\ \text{POTENTIAL OF} \\ \text{GLOBAL ROUTE } (A_{gp}) \end{array} \bigcirc \begin{array}{c} \\ \text{TRAJECTORY TO BE} \\ \text{GENERATED } (A_{lp}(\kappa)) \end{array} \right)$$

$$+ \ \beta \left( \begin{array}{c} \\ \text{POTENTIAL OF} \\ \text{OBSTACLE } (A_{obs}) \end{array} \bigcirc \begin{array}{c} \\ \text{TRAJECTORY TO} \\ \text{GENERATE } (A_{lp}(\kappa)) \end{array} \right)$$

$$+ \ \gamma \, C_{\text{oscillation}}(\kappa)$$

# F I G.  9

START

PERFORM OBSTACLE RECOGNITION AND
MOVEMENT PREDICTION USING IMAGE INFORMATION — S901

GENERATE GRID MAP — S902

DETERMINE GLOBAL ROUTE — S903

GENERATE TRAJECTORY ON WHICH
MOVING OBJECT TRAVELS AS LOCAL ROUTE — S904

DETERMINE CONTROL AMOUNTS (VELOCITY AND
ANGULAR VELOCITY) OF MOVING OBJECT BASED ON
GENERATED TRAJECTORY — S905

CONTROL TRAVELING OF MOVING OBJECT
USING CONTROL AMOUNTS DETERMINED — S906

S907

NO   REACHED FINAL TARGET POSITION?

YES

END

# F I G. 10

START

| GENERATE STATIC GRID MAP AND ACCUMULATE POSITIONS OF OBSTACLE (GENERATE STATIC ACCUMULATION MAP) | ~S1001 |

| GENERATE DYNAMIC GRID MAP AND ACCUMULATE POSITIONS OF TRAFFIC PARTICIPANT (UPDATE DYNAMIC GRID MAP) | ~S1002 |

| GENERATE PREDICTION INFORMATION | ~S1003 |

| GENERATE DYNAMIC PREDICTION MAP | ~S1004 |

END

Europäisches
Patentamt
European
Patent Office
Office européen
des brevets

# EUROPEAN SEARCH REPORT

Application Number

EP 25 15 9787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/051486 A1 (HUANG ZHENQI [US] ET AL) 16 February 2023 (2023-02-16) * paragraphs [0030] - [0044], [0066] - [0107]; figures 1, 3A.B, 4A-C * | 1-13 | INV. G08G1/0962 B60W30/09 B60W30/095 B60W40/04 |
| X | US 2020/103523 A1 (LIU YU [US] ET AL) 2 April 2020 (2020-04-02) * paragraphs [0030] - [0032], [0035] - [0050]; figures 1-4 * | 1,10-13 | B60W50/00 G01S13/89 G01S17/89 G01S17/931 G05D1/246 |
| A | US 2014/244151 A1 (MATSUBARA TOSHIYUKI [JP] ET AL) 28 August 2014 (2014-08-28) * paragraphs [0055], [0056]; figures 6, 7 * | 1-13 | G05D1/622 G05D1/633 G05D1/644 G05D1/646 |
| A | US 2023/095384 A1 (SHARMA BANJADE VESH RAJ [US] ET AL) 30 March 2023 (2023-03-30) * paragraphs [0083] - [0088]; figure 2 * * figure 3 * | 1-13 | G06V20/58 G08G1/16 |

TECHNICAL FIELDS
SEARCHED      (IPC)

G08G
G06V
B60W
G01S
G05D

The present search report has been drawn up for all claims

| Place of search | Date of completion of the search | Examiner |
|---|---|---|
| The Hague | 30 July 2025 | Pariset, Nadia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 9787

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | Publication date | Patent family member(s) | | Publication date |
|---|---|---|---|---|
| US 2023051486 A1 | 16-02-2023 | CN | 115551758 A | 30-12-2022 |
| | | EP | 4149814 A1 | 22-03-2023 |
| | | JP | 7621380 B2 | 24-01-2025 |
| | | JP | 2023525318 A | 15-06-2023 |
| | | US | 2021347382 A1 | 11-11-2021 |
| | | US | 2023051486 A1 | 16-02-2023 |
| | | WO | 2021231452 A1 | 18-11-2021 |
| US 2020103523 A1 | 02-04-2020 | CN | 112752988 A | 04-05-2021 |
| | | EP | 3857264 A1 | 04-08-2021 |
| | | JP | 7527277 B2 | 02-08-2024 |
| | | JP | 2022502306 A | 11-01-2022 |
| | | US | 2020103523 A1 | 02-04-2020 |
| | | WO | 2020069025 A1 | 02-04-2020 |
| US 2014244151 A1 | 28-08-2014 | CN | 103842230 A | 04-06-2014 |
| | | EP | 2765048 A1 | 13-08-2014 |
| | | JP | 5729480 B2 | 03-06-2015 |
| | | JP | WO2013051082 A1 | 30-03-2015 |
| | | KR | 20140060326 A | 19-05-2014 |
| | | RU | 2014112202 A | 10-11-2015 |
| | | US | 2014244151 A1 | 28-08-2014 |
| | | WO | 2013051082 A1 | 11-04-2013 |
| US 2023095384 A1 | 30-03-2023 | DE | 112020006966 T5 | 26-01-2023 |
| | | US | 2023095384 A1 | 30-03-2023 |
| | | WO | 2021194590 A1 | 30-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2022070303 A